# FASCICULE DE BREVET EUROPEEN

(11) **EP 0 820 363 B1**
(45) Date de publication et mention de la délivrance du brevet: **22.03.2000**
(21) Numéro de dépôt: 96912085.6
(22) Date de dépôt: 09.04.1996
(51) Int. Cl.: B23K 26/18, B41M 1/34, B41M 5/28, C03C 17/22, G02C 7/02

(54) **PROCEDE POUR LE MARQUAGE AU LASER D'UN OBJET EN VERRE, ET OBJET EN VERRE, EN PARTICULIER COQUILLE DE MOULAGE POUR LENTILLE OPHTALMIQUE, AINSI MARQUE**
LASERMARKIERUNGSVERFAHREN EINES WERKSTÜCKES AUS GLAS,UND DAFÜR HERGESTELLTES WERKSTÜCK AUS GLAS,INSBESONDERE GIESSFORM EINER OPHTALMOLOGISCHEN LINSE
METHOD FOR LASER MARKING A GLASS OBJECT, AND RESULTING MARKED GLASS OBJECT, PARTICULARLY A MOULD FOR AN OPHTHALMIC LENS

(30) Priorité: 11.04.1995 FR 9504314
(43) Date de publication de la demande: 28.01.1998
(73) Titulaire: ESSILOR INTERNATIONAL Compagnie Générale d'Optique, F-94220 Charenton le Pont (FR)
(72) Inventeur: LUCCHESI, Moreno, F-54470 MAMEY (FR); PADIOU, Jean-Marc, F-94500 Champigny-sur-Marne (FR)
(74) Mandataire: CABINET BONNET-THIRION
(86) Numéro de dépôt international: FR9600533
(87) Numéro de publication internationale: WO9632221

(56) Documents cités:
- EP-A- 0 531 584
- DE-A- 3 402 871
- FR-A- 2 690 862
- PATENT ABSTRACTS OF JAPAN vol. 17, no. 309 (C-1070), 14 Juin 1993 & JP,A,05 025052 (FUJI KAGAKU KOGYO K.K.), 2 Février 1993,

## Description

La présente invention concerne d'une manière générale le marquage d'un quelconque objet en verre, pour l'application, par exemple, à celui-ci, d'un numéro de série, d'une référence, ou d'une quelconque autre inscription.

Il peut s'agir, par exemple, aussi bien d'un récipient que d'un pare-brise.

La présente invention vise cependant plus particulièrement, mais non pas donc obligatoirement exclusivement, le marquage des coquilles de moulage mises en oeuvre pour le moulage de lentilles ophtalmiques en matière synthétique.

Pour assurer l'identification de ces coquilles de moulage, et ainsi permettre leur suivi, notamment au cours d'un processus de fabrication de lentilles ophtalmiques, il est nécessaire de les affecter d'une marque comportant, sous forme codée ou non, toutes les informations souhaitées.

Il a été proposé de procéder par impression, à l'aide par exemple d'un cément appliqué par tampographie, c'est-à-dire à l'aide d'un tampon de transfert, et soumis ensuite à une trempe thermique.

Un tel procédé a pour inconvénient de manquer de flexibilité de mise en oeuvre, alors même qu'il est parfois souhaitable de pouvoir changer rapidement de marque ou motif à imprimer.

En outre, la marque obtenue a nécessairement des dimensions relativement importantes, en sorte que, même si elle est apposée à la périphérie d'une coquille de moulage, elle empiète inévitablement, en projection, sur une partie au moins de la zone utile de cette coquille de moulage.

Or le cément mis en oeuvre est en pratique le plus souvent opaque au rayonnement ultraviolet.

La marque peut donc dans ce cas être de manière intempestive une gêne lors du processus de fabrication d'une lentille ophtalmique si la polymérisation de la matière synthétique correspondante implique une insolation à un tel rayonnement.

Il a également été proposé de procéder par gravure, et, plus particulièrement, par gravure au laser, pour réduire au mieux les dimensions de la marque obtenue.

Il est possible par exemple de mettre en oeuvre un laser de type "EXCIMERE", mais un tel laser, qui conduit à une attaque du verre par sublimation, est lourd, encombrant et onéreux.

Il est possible, également, de mettre en oeuvre, de manière plus pratique, un laser de type CO2, mais, avec un tel laser, l'attaque du verre se fait sous forme d'éclats, et, mal contrôlée, elle peut conduire intempestivement à la formation de microfissures.

Il est possible, enfin, de mettre en oeuvre un laser de type YAG, qui, tout en étant d'emploi aussi pratique et économique qu'un laser de type CO2, ne conduit pas aux inconvénients de celui-ci.

En effet, l'attaque du verre s'apparente dans ce cas à une fusion de surface conduisant à un simple dépoli.

Mais, le verre étant transparent à la longueur d'onde du faisceau laser correspondant, il faut faire interférer celui-ci avec une couche d'un matériau approprié dûment appliqué en surface à cet effet sur l'objet en verre à traiter.

Un tel procédé de gravure se trouve notamment décrit dans la demande de brevet français qui, déposée sous le No 92 05644 le 7 mai 1992, a été publié sous le No 2 690 862.

En pratique, dans cette demande de brevet français, le matériau constitutif de la couche mise en oeuvre est choisi pour être opaque à la longueur d'onde du faisceau laser.

Cette couche ne joue en effet qu'un rôle passif à l'égard du verre, en renvoyant vers celui-ci la chaleur due à la focalisation du faisceau laser, ce qui suffit à élever localement la température à la valeur nécessaire à la fusion recherchée.

L'inconvénient majeur d'un tel procédé de gravure tient au manque de contraste de la marque obtenue, qui rend en pratique impossible toute lecture ultérieure de cette marque au moyen d'un dispositif de lecture automatique.

La présente invention a d'une manière générale pour objet une disposition permettant de tirer avantageusement un parti supplémentaire de la couche de matériau mise en oeuvre, pour une amélioration des conditions d'exploitation de la marque obtenue.

De manière plus précise, elle a tout d'abord pour objet un procédé pour le marquage d'un objet en verre, du genre suivant lequel on applique en surface à celui-ci une couche d'un matériau avec lequel on fait interférer un faisceau laser, ce procédé étant d'une manière générale caractérisé en ce que on choisit pour matériau constitutif de cette couche un matériau capable de réaction avec le verre ; elle a encore pour objet tout objet en verre, et, notamment, toute coquille de moulage, comportant au moins localement une marque obtenue en application d'un tel procédé.

Préférentiellement, on choisit pour matériau constitutif de la couche mise en oeuvre un matériau capable de réaction physique avec le verre, et, plus précisément, un matériau capable de diffusion dans celui-ci.

Il s'agit par exemple d'un cément.

Quoi qu'il en soit, grâce à la réaction qui se produit entre ce matériau et le verre, la marque obtenue présente avantageusement une certaine coloration en fond de gravure.

Autrement dit, il est avantageusement associé, suivant l'invention, pour l'obtention de la marque recherchée, d'une part, une gravure, qui assure mécaniquement la pérennité de cette marque, en confortant sa résistance à l'abrasion et aux agressions chimiques, et, donc, sa tenue dans le temps, et, d'autre part, une coloration, qui, en renforçant son contraste, en facilite et en rend plus précise la lecture ultérieure.

Des résultats particulièrement favorables sont obtenus, lorsque, à la différence, des dispositions décrites dans FR-A1-2 690 862 mentionnée ci-dessus, on choisit pour matériau constitutif de la couche mise en oeuvre un matériau au moins en partie perméable au faisceau laser et on fait intervenir celui-ci du côté de cette couche, c'est-à-dire du côté de celle-ci opposé à l'objet à marquer.

Mais, en variante, il peut également être envisagé de faire intervenir le faisceau laser du côté de cet objet.

EP-A-0 531 584 décrit un procédé tel que défini dans le préambule de la revendication 1.

Les caractéristiques et avantages de l'invention ressortiront d'ailleurs de la description qui va suivre, à titre d'exemple, en référence aux dessins schématiques annexés sur lesquels :
la figure 1 est une vue en coupe axiale d'un objet en verre au marquage duquel le procédé suivant l'invention est plus particulièrement destiné ;
la figure 2 est une vue qui, reprenant pour partie, à échelle supérieure, celle de la figure 1, illustre le procédé de marquage suivant l'invention, suivant un premier mode de mise en oeuvre de celui-ci ;
la figure 3 est, à l'échelle de la figure 2, une vue partielle de l'objet en verre, après son marquage ;
la figure 4 est une vue analogue à celle de la figure 2, pour un deuxième mode de mise en oeuvre du procédé de marquage suivant l'invention.

Ces figures illustrent, à titre d'exemple, le cas où l'objet en verre 10 à marquer est une coquille de moulage destinée à former, avec une coquille de moulage 10' de même type et un joint d'étanchéité 11 disposé à la périphérie de l'ensemble, une cavité de moulage 12 propre au moulage d'une lentille ophtalmique.

Les dispositions correspondantes étant bien connues par elles-mêmes, et ne relevant pas en propre de la présente invention, elles ne seront pas décrites plus en détail ici.

Il suffira d'indiquer que l'objet en verre 10 se présente sous la forme générale d'un palet, sensiblement équi-épais, dont le contour périphérique 13 est par exemple circulaire, et qui est globalement bombé, avec une face interne 14A du côté de la cavité de moulage 12 et une face externe 14B du côté opposé à celle-ci.

Par exemple, la face interne 14A est concave et la face externe 14B est convexe.

Quoi qu'il en soit, il s'agit de marquer cet objet en verre 10 en vue de son identification, c'est-à-dire de lui apposer une marque 15.

Préférentiellement, cette marque 15 est apposée sur la face externe 14B de l'objet en verre 10, au voisinage immédiat de son contour périphérique 13, et elle doit avoir des dimensions aussi réduites que possible pour ne pas empiéter, en projection, sur sa zone utile.

De manière connue en soi, pour l'apposition de la marque 15, il est procédé par gravure, et, pour ce faire, on applique en surface à l'objet en verre 10, sur sa face externe 14B, à l'endroit choisi, une couche 16 d'un matériau 17 avec lequel on fait interférer un faisceau laser 18, c'est-à-dire un rayonnement, qui, émis par un laser 19, est dûment focalisé en un point 20 de la face externe 14B par un dispositif de contrôle 21 permettant à la demande d'en varier la déviation suivant le tracé de la marque 15 à obtenir.

Les dispositions correspondantes sont également bien connues par elles-mêmes, et, ne relevant donc pas de l'invention, elles ne seront pas décrites ici.

Il suffira d'indiquer que, en pratique, le laser 19 mis en oeuvre est, préférentiellement, un laser de type YAG, de longueur d'onde égale à 1,06 µm.

Suivant l'invention, on choisit pour matériau 17 constitutif de la couche 16 un matériau 17 capable de réaction avec le verre.

Préférentiellement, on choisit un matériau 17 capable de diffusion dans le verre.

Il s'agit, par exemple, d'un cément, et, plus précisément, d'un cément comportant un mélange de sels de cuivre avec au moins un autre sel métallique.

Les sels de cuivre peuvent par exemple être des sulfates et/ou des phosphates, et, à titre d'autres sels métalliques, il peut leur être associé un oxyde ou un phosphate d'argent, et/ou divers autres oxydes métalliques.

Par exemple, et préférentiellement, le matériau 17 ainsi mis en oeuvre est choisi pour être au moins partiellement perméable au faisceau laser 18.

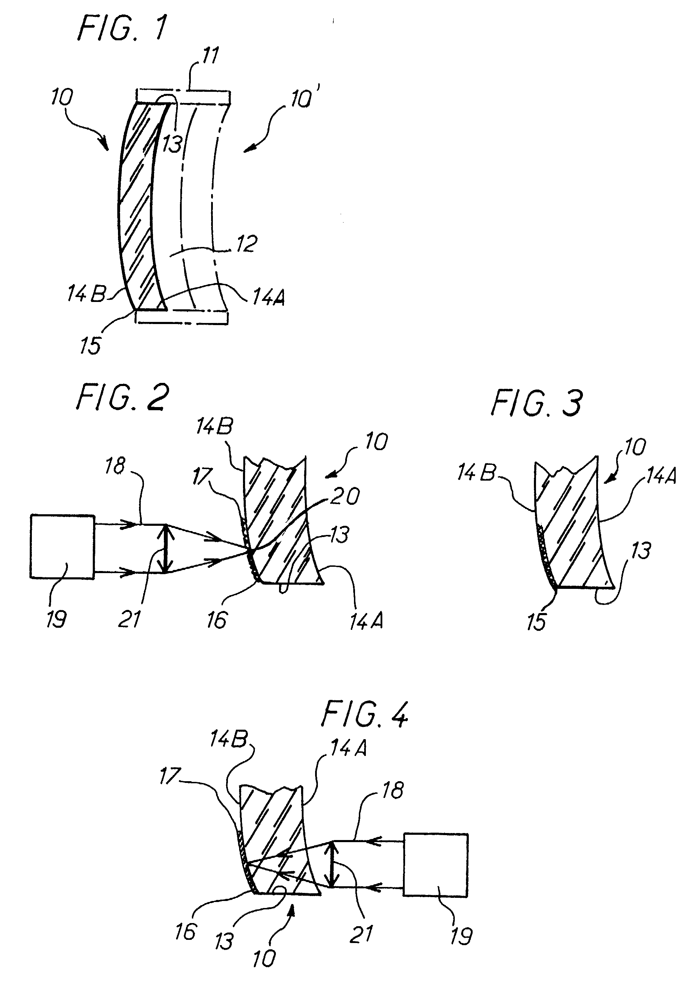

Ainsi, et tel que représenté à la figure 2, il est possible de faire intervenir le laser 19 du côté de la couche 16, c'est-à-dire du côté de cette couche 16 opposé à l'objet en verre 10 à traiter.

Par exemple, le matériau 17 mis en oeuvre est, pour son application à l'objet en verre 10, mélangé à une huile, telle que par exemple une huile de paraffine.

Il peut ainsi être mis en place au pinceau, ou par tout autre moyen d'application ou d'impression.

Lors de l'irradiation à l'aide du faisceau laser 18, il se produit, au point de focalisation 20 correspondant, une élévation de température qui, d'une part, provoque par fusion superficielle la gravure recherchée, sous la forme en pratique d'un simple dépoli, et qui, d'autre part, provoque, par migration par diffusion du matériau 17 dans le verre, une coloration du fond des creux correspondants.

Le dispositif de contrôle 21 permet, par déviation du faisceau laser 18, le tracé de la marque 15 à obtenir.

Bien entendu, il peut être piloté à cet effet par un calculateur, non représenté, dûment programmé en conséquence.

Si désiré, la marque 15 peut être codée.

Par exemple, elle peut être codée sous forme de points alignés en lignes et colonnes, suivant un code de type matriciel.

Quoi qu'il en soit, chaque point de la gravure obtenue a globalement une largeur de l'ordre de 0,1 mm et une profondeur de 5 µm.

Avec un code de type matriciel, il est ainsi possible d'obtenir une marque 15 comportant vingt et une lignes et vingt et une colonnes dans un carré de 3 mm de côté.

Autrement dit, la marque 15 n'empiète pas de plus de 3 mm sur la surface de la face externe 14B de l'objet en verre 10.

Bien entendu, après l'intervention du laser 19, la couche 16 de matériau 17 est éliminée par un lavage, à l'aide par exemple d'un simple jet d'eau chaude à température modérée, de l'ordre de 60°C, et à pression relativement faible, de l'ordre d'environ 4 bars.

Seule subsiste alors, ancrée dans l'objet en verre 10, à la surface de la face externe 14B de celui-ci, comme représenté à la figure 3, la marque 15 recherchée.

Suivant la variante de mise en oeuvre représentée à la figure 4, on fait intervenir le faisceau laser 18 du côté de l'objet en verre 10, c'est-à-dire du côté de la couche 16 tourné vers cet objet en verre 10.

Le faisceau laser 18 traverse alors l'objet en verre 10.

Par contre, le matériau 17 constitutif de la couche 16 peut, dans ce cas, être opaque au faisceau laser 18, et, préférentiellement, il est effectivement opaque à celui-ci.

En particulier, le matériau mis en oeuvre pour la couche appliquée à l'objet en verre à marquer pourrait, en variante, être capable d'une réaction chimique avec le verre, pourvu que cette réaction chimique conduise à une coloration de la gravure obtenue.

Il va de soi, en outre, que, comme déjà précédemment indiqué, le domaine d'application de l'invention n'est pas limité au marquage des seules coquilles de moulage pour moulage de lentilles ophtalmiques, mais s'étend au contraire aussi bien au marquage de n'importe quel autre objet en verre.

## Revendications

1. Procédé pour le marquage d'un objet en verre par gravure, dans lequel on applique en surface à cet objet en verre (10) une couche (16) d'un matériau (17) avec lequel on fait interférer un faisceau laser (18), caractérisé en ce qu'on choisit pour matériau (17) constitutif de la couche (16) un matériau (17) réagissant avec le verre et permettant d'obtenir une coloration en fond de gravure lors de l'irradiation avec le faisceau laser, la coloration en fond de gravure conférant à la marque obtenue un contraste suffisant pour que sa lecture ultérieure par un dispositif de lecture automatique soit possible.

2. Procédé suivant la revendication 1, caractérisé en ce qu'on choisit pour matériau (17) constitutif de la couche (16) un matériau (17) capable de diffusion dans le verre.

3. Procédé suivant la revendication 2, caractérisé en ce qu'on choisit pour matériau (17) constitutif de la couche (16) un cément.

4. Procédé suivant la revendication 3, caractérisé en ce qu'on choisit pour matériau (17) constitutif de la couche (16) un cément comportant un mélange de sels de cuivre avec au moins un autre sel métallique.

5. Procédé suivant l'une quelconque des revendications 1 à 4, caractérisé en ce qu'on fait intervenir le faisceau laser (18) du côté de la couche (16).

6. Procédé suivant l'une quelconque des revendications 1 à 4, caractérisé en ce qu'on fait intervenir le faisceau laser (18) du côté de l'objet en verre (10).

7. Procédé suivant l'une quelconque des revendications 1 à 6, caractérisé en ce que, pour l'émission du faisceau laser (18), on met en oeuvre un laser (19) de type YAG.

8. Objet en verre comportant au moins localement une marque formée par gravure avec un faisceau laser, caractérisé en ce que ladite marque (15) comporte en fond de gravure une coloration lui conférant un contraste suffisant pour que sa lecture ultérieure par un dispositif de lecture automatique soit possible, ladite coloration étant un produit de réaction du verre et d'un matériau irradié avec ledit faisceau laser alors qu'il était appliqué en couche sur la surface dudit objet.

9. Objet suivant la revendication 8, caractérisé en ce que ledit matériau (17) est capable de diffusion dans le verre.

10. Objet suivant la revendication 9, caractérisé en ce que ledit matériau (17) est un cément.

11. Objet suivant la revendication 10, caractérisé en ce que ledit cément comporte un mélange de sels de cuivre avec au moins un autre sel métallique.

12. Objet suivant l'une quelconque des revendications 8 à 11, caractérisé en ce que ledit faisceau laser est de type YAG.

## Patentansprüche

1. Verfahren zum Markieren eines Glasgegenstandes mittels Gravur, bei welchem man oberflächlich an dem Glasgegenstand (10) eine Schicht (16) aus einem Material (17) anbringt, mit welchem man einen Laserstrahl (18) wechselwirken läßt, dadurch gekennzeichnet, daß man für das die Schicht (16) bildende Material (17) ein Material (17) auswählt, welches mit dem Glas reagiert und welches es ermöglicht, eine Färbung am Boden der Gravur während der Bestrahlung mit dem Laserstrahl zu erhalten, wobei die Färbung am Boden der Gravur der erhaltenen Markierung einen ausreichenden Kontrast verleiht, um das anschließende Ablesen durch eine automatische Lesevorrichtung zu ermöglichen.

2. Verfahren nach Anspruch 1, dadurch gekennzeichnet, daß man für das die Schicht (16) bildende Material (17) ein Material (17) wählt, welches in der Lage ist, in das Glas zu diffundieren.

3. Verfahren nach Anspruch 2, dadurch gekennzeichnet, daß man für das die Schicht (16) bildende Material (17) einen Zement wählt.

4. Verfahren nach Anspruch 3, dadurch gekennzeichnet, daß man für das die Schicht (16) bildende Material (17) einen Zement wählt, welcher eine Mischung aus Kupfersalzen mit zumindest einem anderen metallischen Salz umfaßt.

5. Verfahren nach einem der Ansprüche 1 bis 4, dadurch gekennzeichnet, daß man den Laserstrahl (18) an der Seite der Schicht (16) bewirkt.

6. Verfahren nach einem der Ansprüche 1 bis 4, dadurch gekennzeichnet, daß man den Laserstrahl (18) an der Seite des Glasgegenstandes (10) bewirkt.

7. Verfahren nach einem der Ansprüche 1 bis 6, dadurch gekennzeichnet, daß zur Emission des Laserstrahles (18) ein Laser (19) vom Typ YAG verwendet wird.

8. Glasgegenstand mit einer zumindest lokal mittels Gravur durch Laserstrahl gebildeten Markierung, dadurch gekennzeichnet, daß die Markierung (15) am Boden der Gravur eine Färbung aufweist, welche einen ausreichenden Kontrast verleiht, um ein anschließendes Ablesen mittels einer automatischen Lesevorrichtung zu ermöglichen, wobei die Färbung aus einer Reaktion des Glases mit einem während der schichtweisen Anwendung an der Oberfläche des Gegenstandes mit dem Laserstrahl bestrahlten Material resultiert.

9. Gegenstand nach Anspruch 8, dadurch gekennzeichnet, daß das Material (17) in das Glas diffundieren kann.

10. Gegenstand nach Anspruch 9, dadurch gekennzeichnet, daß das Material (17) ein Zement ist.

11. Gegenstand nach Anspruch 10, dadurch gekennzeichnet, daß der Zement eine Mischung aus Kupfersalzen mit zumindest einem anderen metallischen Salz enthält.

12. Gegenstand nach einem der Ansprüche 8 bis 11, dadurch gekennzeichnet, daß der Laserstrahl vom YAG-Typ ist.

## Claims

1. A process for marking a glass object by engraving, wherein there is applied to said glass object (10) at the surface thereof a layer (16) of a material (17) with which a laser beam (18) is caused to interfere. characterised in that the constituent material (17) selected for the layer (16) is a material (17) which reacts with the glass and which makes it possible to obtain coloration at the bottom of the engraving upon irradiation with the laser beam, the coloration at the bottom of the engraving imparting to the mark produced a sufficient contrast for subsequent reading thereof by an automatic reading apparatus to be possible.

2. A process according to claim 1 characterised in that the constituent material (17) selected for the layer (16) is a material (17) which is capable of diffusion into the glass.

3. A process according to claim 2 characterised in that a cement is selected for the constituent material (17) of the layer (16).

4. A process according to claim 3 characterised in that a cement comprising a mixture of copper salts with at least one other metal salt is selected for the constituent material (17) of the layer (16).

5. A process according to any one of claims 1 to 4 characterised in that the laser beam (18) is caused to act on the side of the layer (16).

6. A process according to any one of claims 1 to 4 characterised in that the laser beam (18) is caused to act on the side of the glass object (10).

7. A process according to any one of claims 1 to 6 characterised in that, for emission of the laser beam (18), a laser (19) of YAG type is used.

8. A glass object comprising at least locally a mark formed by engraving with a laser beam, characterised in that said mark (15) comprises at the bottom of the engraving a coloration which imparts to it a sufficient contrast for subsequent reading thereof by an automatic reading apparatus to be possible, said coloration being a product of reaction with the glass and of a material which was irradiated by means of said laser beam at the time when it was applied as a layer to the surface of said object.

9. An object according to claim 8, characterised in that said material (17) is capable of diffusion into the glass.

10. An object according to claim 9, characterised in that said material (17) is a cement.

11. An object according to claim 10, characterised in that said cement comprises a mixture of copper salts with at least one other metal salt.

12. An object according to any one of claims 8 to 11, characterised in that said laser beam is of the YAG type.
